Europäisches Patentamt

European Patent Office

Office européen des brevets

(11) Publication number: **0 268 771 B1**

# EUROPEAN PATENT SPECIFICATION

(45) Date of publication of patent specification: **04.03.92** (51) Int. Cl.⁵: **G06F 3/12, B41J 3/36**

(21) Application number: **87113641.2**

(22) Date of filing: **17.09.87**

(54) Data storage apparatus for portable label printer.

(30) Priority: **17.10.86 JP 245342/86**

(43) Date of publication of application:
**01.06.88 Bulletin 88/22**

(45) Publication of the grant of the patent:
**04.03.92 Bulletin 92/10**

(84) Designated Contracting States:
**CH DE FR GB IT LI SE**

(56) References cited:
**EP-A- 0 126 898**
**EP-A- 0 208 203**

**PATENT ABSTRACTS OF JAPAN, vol. 7, no.
90 (P-191)[1235] 14th April 1983; & JP-A-58 16
339 (TERAOKA SEIKOU K.K.) 31-01-1983**

**PATENT ABSTRACTS OF JAPAN, vol. 6, no.
248 (P-160)[1126], 7th December 1982; & JP-
A-57 146 384 (KUBOTA TEKKO K.K.)
09-09-1982**

(73) Proprietor: **Kabushiki Kaisha Sato
15-5, 1-chome, Shibuya
Shibuya-ku Tokyo(JP)**

(72) Inventor: **Watanabe Isao
22-113, 12,3-Chome,Shinkawa
Mitaka-shi, Tokyo(JP)**
Inventor: **Ohta, Masataka
1349-5, Nakanoshima, Tama-ku,
Kawasaki-shi,Kanagawa-ken(JP)**

(74) Representative: **Patentanwälte Grünecker,
Kinkeldey, Stockmair & Partner
Maximilianstrasse 58
W-8000 München 22(DE)**

## Description

This invention relates to a data storage apparatus for holding the necessary data to be printed on labels by a portable label printer.

Conventional label printers have needed to be connected to a data preparation means, such as a personal computer or the like, and data prepared using the data preparation means such as for example bar code data, quantity data, product name data and the like is then provided from the data preparation means and the labels are printed in accordance with this data. There are also integrated-type label printers that are equipped with storage means for storing the data to be printed on the labels, and with a keyboard that can be operated to input the requisite data.

The former type of label printers have the drawback that they are used while being connected with the data preparation means; as such they cannot be conveniently carried around, and the places they can be used in are therefore limited. While the latter type of label printers (EP-A-126 898) are equipped with data storage means and keyboard and can be carried around, they have the drawbacks of being heavy, owing to the use of batteries, and of also being large, and therefore unwieldy, and are also prone to give rise to data input errors.

Another type of label printer (EP-A-208203 falling under Article 54 (3) and (4) EPC for the contracting states DE, FR and GB) comprises a data storage apparatus in a portable housing separate from the label printer and external means providing data to be stored in the data storage apparatus. Said apparatus can be electrically connected and disconnected by means of a cable with said external means. The portable housing enclosing the data storage apparatus can be electrically and mechanically connected with the label printer or can be only electrically connected by means of a cable with the label printer when the housing is arranged separately from the label printer.

In view of the afore-mentioned drawbacks, an object of this invention is to provide an apparatus that enables a label printer to be conveniently carried around and also makes it easy to handle and operate.

Said object is solved in accordance with the characterizing part of claim 1 of the first claim set for DE, FR and GB by means of particular keys enabling easy handling and operation of the label printer since all the function keys are provided in the portable housing separate from the label printer.

The above-mentioned object is solved in accordance with the characterizing part of claim 1 of the second claim set for CH, LI, IT and SE by enclosing said data storage apparatus in a portable housing located remotely from the label printer and from said external means. The portable label printer and said data storage apparatus being electrically connected by a detachable cable.

The embodiment of the present invention will now be described with reference to the accompanying drawings.

BRIEF DESCRIPTION OF THE DRAWINGS

Figure 1 is an example of the use of the apparatus according to the present invention;
Figure 2 is a plan view of the apparatus of the invention;
Figure 3 is a block diagram showing the construction of the apparatus;
Figures 4 and 5 are explanatory flow-charts showing the sequence of operations of the apparatus of the present invention; and
Figure 6 is a perspective view of labels attached to a backing sheet loaded in a label printer connected to the apparatus of the present invention.

DESCRIPTION OF THE PREFERRED EMBODIMENT

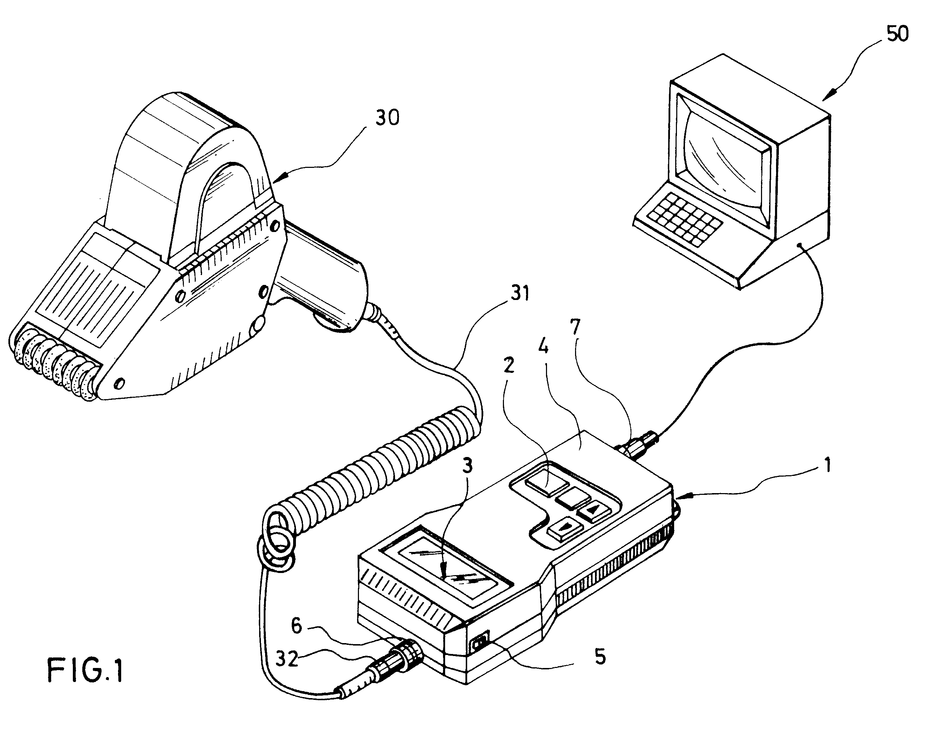

In Figure 1, the numeral 1 denotes a data storage apparatus for use with a portable label printer 30, in accordance with the present invention. The data storage apparatus 1 has a function key cluster 2 and a LCD screen 3. The keys of the function key cluster 2 and the display surface of the LCD screen 3 are provided so as to be exposed in the surface of a case 4. Provided on other surfaces of the case 4 are a switch 5, a terminal 6 for connecting a portable label printer 30, and a terminal 7 for connecting an external device 50.

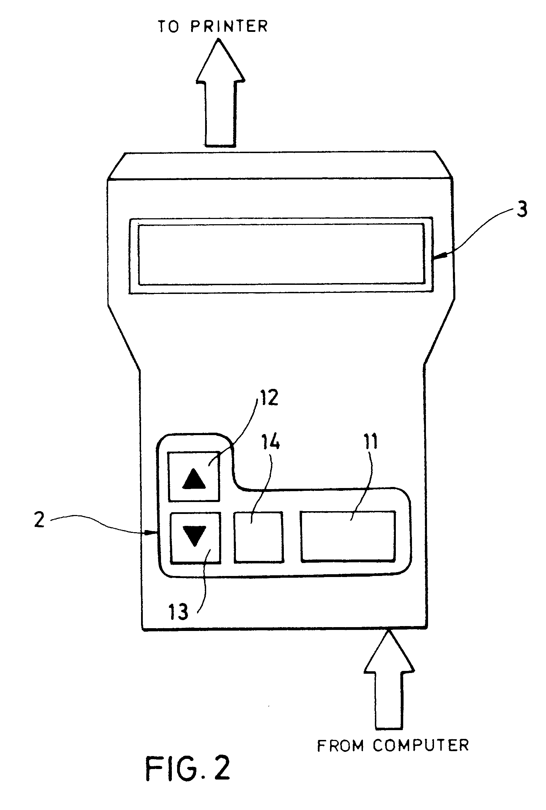

With reference to Figure 2 showing a plan view of the data storage apparatus 1, the function key cluster 2 is equipped with a mode key 11, scroll-up key 12, scroll-down key 13 and a "Print Label" key 14.

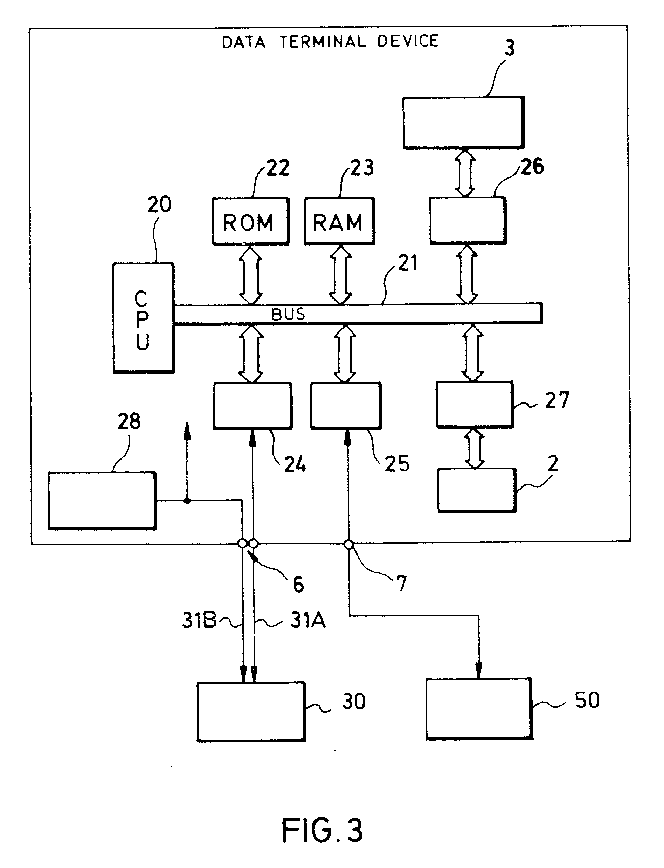

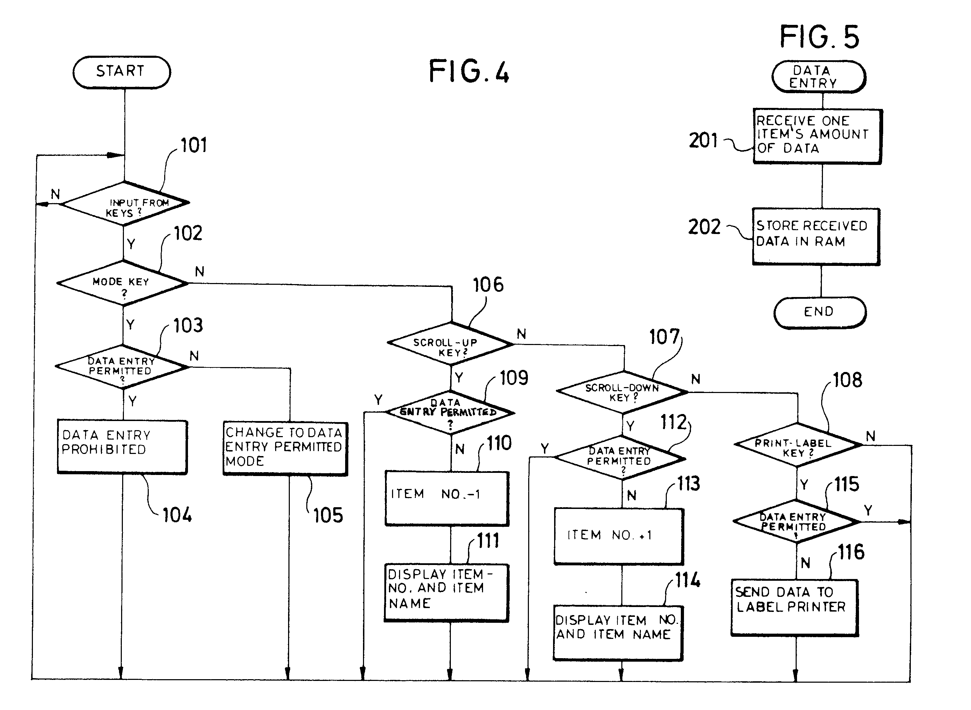

With reference to Figure 3, the data storage apparatus 1 is comprised mainly of a microcomputer. The numeral 20 denotes a CPU, 21 a bus, 22 a ROM, 23 a RAM, and 24 and 25 I/O circuits. Stored in the ROM 22 is the program illustrated by the flow-charts of Figures 4 and 5. The LCD screen 3 is connected to a display control circuit 26, which in turn is connected to the CPU 20 via the bus 21. The function key cluster 2 is connected to key input circuit 27, which also is connected to the CPU 20 via the bus 21. The CPU 20 performs data processing in accordance with the program stored in the ROM 22, and controls each of the parts. Numeral 28 denotes a rechargeable battery. The battery 28 forms the power source for the data storage apparatus 1 and also supplies the power for the portable label printer 30, via the terminal 6 shown in Figure 1.

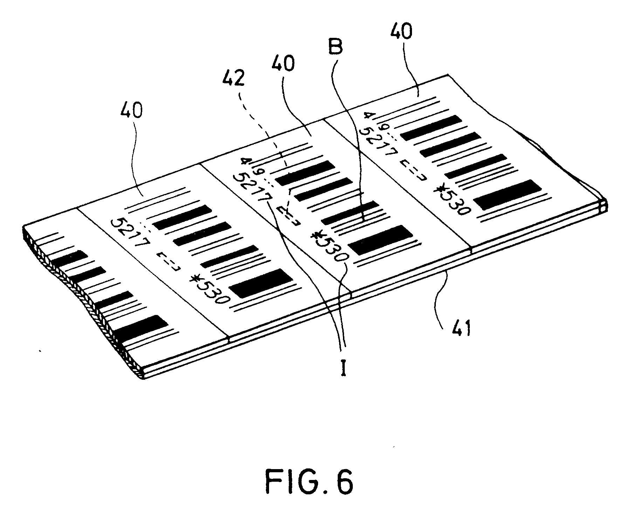

The portable label printer 30 which in use is connected to the data storage apparatus 1 will now be described hereinbelow The portable label printer 30 is for printing labels, and issuing the labels thus printed. With reference to Figure 6, each of the labels 40 is coated on its reverse side with an adhesive and the labels 40 are detachably adhered continuously along a backing sheet 41 which is coated with a separating agent, and are maintained in roll form in the portable label printer 30. Therefore, by bending the backing sheet 41, the labels 40 can be easily separated from the backing sheet 41.

The labels 40 are shown in Figure 6 in their printed state. The labels 40 are printed with information I such as a bar code B representing a merchandise code or manufacturing code, a department code or a price. On the reverse surface of the backing sheet 41 are printed marks 42 which are used for position detection purposes. The portable label printer 30 is provided with a transport mechanism for transporting the backing sheet 41, a character generator for generating characters and symbols in accordance with data provided from an external source via the cable 31 shown in Figure 1, a thermal-type printing mechanism which prints in accordance with the output of the character generator, and control circuitry for controlling each of the above parts. The electric power required for the operation of the portable label printer 30 is provided from an external source via a power supply line 31B which is incorporated in the cable 31. The connector 32 at the end of the cable 31 can be detachably attached to the terminal 6 provided on the data storage apparatus 1. When the connector 32 is attached to the terminal 6, the data line 31A of the cable 31 is connected to the I/O circuit 24 and the power supply line 31B of the cable 31 is connected to the battery 28.

When a personal computer 50 is attached to the external device connection terminal 7, the personal computer 50 is linked to the I/O circuit 25.

The operation of the thus configured data storage apparatus 1 will now be described with reference to the flow-charts of Figures 4 and 5.

In step 101, the CPU 20 waits for input from the function key cluster 2. When such input occurs, in step 102 it is determined whether the input is from mode key 11. If the input is from the mode key 11, the CPU 20 program moves to step 103 where it is determined whether the current mode is a data entry permitted mode. If the mode is data entry permitted, after data entry prohibited mode is set in step 104, the program procedure reverts to step 101; if the mode is not data entry permitted, after data entry permitted mode has been set in step 105, the program reverts to step 101. That is, when the mode key 11 is pressed, the CPU 20 replaces the mode at that time with the other mode.

In step 102, if the CPU 20 determines that the keyed input is not from the mode key 11, the program moves to step 106 and it is determined whether the scroll-up key 12 has been pressed. If the answer is no, the program advances to step 107 where it is determined whether the scroll-down key 13 has been pressed, and if the answer is again no, the program proceeds to step 108 where it is determined whether the Print Label key has been pressed. If the CPU determines in step 106 that the scroll-up key 12 has been pressed, it determines in step 109 whether the current mode is data entry permitted. If it is the data entry permitted mode, the CPU 20 moves the procedure to step 101; if the mode is data entry prohibited, the procedure moves to step 110. In step 110, the CPU 20 decrements an item number by one. The item number will now be explained. The data provided from the personal computer 50 for printing on the labels consists of bar code B data, department code data, price data or other such information I. When the merchandise is of the same type these data are also the same, while the data differs when the merchandise is of different types. Hence, a number is attached to the data corresponding to each type of merchandise: this is the item number. This means that the item number corresponds to the name of the merchandise. Stored in a specific area of the RAM 23 are these item numbers and the merchandise name data corresponding to the item numbers. Data for each item input from an external source is stored by the CPU 20 in the RAM 23 so as to correspond with the aforementioned item number. After the data entry prohibited mode has been set by operating the mode key 11, the CPU 20 reads out the specific item number and the corresponding item name data stored in the RAM 23, and displays this data on the LCD screen 3.

Again with reference to Figure 4, in step 110, the CPU 20 decrements by one the item number displayed at that time on the LCD screen 3, and in next step, step 111, reads the resulting item number and the corresponding item name data from the RAM 23, and after processing the data for display on the LCD screen 3, the procedure reverts to step 101. In step 107 the CPU 20 determines whether the scroll-down arrow key 13 has been pressed, and in step 112 it determines whether the current mode is data entry permitted. If the mode is data entry permitted, the CPU 20 reverts to step 101, and it proceeds to step 113 if the mode is data entry prohibited. In step 113, the CPU 20 increments by one the item number displayed at that time on the LCD screen 3, and then in step 114, reads from the RAM 23 the resultant item number and the corresponding item name data and processes it to display it on the LCD screen 3, following which the procedure reverts to step 101. Furthermore, when in step 108 the CPU 20 determines that the Print Label key 14 has been pressed, in step 115 it determines whether the current mode is data entry permitted. When the mode is data entry permitted, the CPU 20 goes back to step 101, while if the mode is data entry prohibited, the program advances to step 116. In step 116, the CPU 20 reads out from the RAM 23 the data corresponding to the item number displayed at that time on the LCD screen 3, and sends it to the portable label printer 30 connected to the terminal 6. The CPU 20 then reverts to step 101.

The flow-chart of Figure 5 illustrates the procedure of inputting and storing data provided from an external device via the terminal 7. This process is interrupt-driven. That is, when the mode is data entry permitted and there is data being input from an external source 50 via the terminal 7, in step 201, the amount of one item's data is received, and in the next step, step 202, the received data is stored in the RAM 23. In this case, as already stated, the CPU 20 makes the received data correspond to the item number and stores it in the RAM 23.

An example of the application of the data storage apparatus 1 will now be described with reference to Figure 1. In the initial state, the data storage apparatus 1, the portable label printer 30 and the personal computer 50 are considered as not being connected. To begin with, the operator connects the personal computer 50 to data storage apparatus 1 via the terminal 7 (Figure 3). The operator then operates the power supply switch 5 to switch on the power supply. At this point the LCD screen 3 will display which mode is active, the data entry permitted mode or the data entry prohibited mode. If for example the mode is data entry permitted, the characters "tsushin kyoka" [Input Allowed] appear on the LCD screen 3. If the mode is data entry prohibited, the operator pushes the mode key 11 to switch to data entry permitted mode.

Next, the operator operates the keys of the personal computer 50 to send the label printing data to the data storage apparatus 1. At this point the label printing data is stored in the RAM 23 of the data storage apparatus 1. Next, the operator disconnects the personal computer 50 from the terminal 7, carries the data storage apparatus 1 and the portable label printer 30 to the required location, and if they are not connected, proceeds to connect the data storage apparatus 1 to the portable label printer 30, by attaching the cable 31 connector 32 to the terminal 6 of the data storage apparatus 1. Doing this connects the data line 31A in the cable 31 to the I/O circuit 24 and the power supply line 31B to the battery 28.

The operator then presses the mode key 11 to put the data storage apparatus 1 into the data entry prohibited mode. The operator then uses the scroll-up key 12 and scroll-down key 13 to display the required item number and item name on the LCD screen 3. The operator then presses the Print Label key 14, which causes the label printing data corresponding to the item number displayed on the LCD screen 3 to be read out of the RAM 23 and output to the portable label printer 30. By holding the portable label printer 30 by its handle and pushing the printer's start button, labels 40 are printed as shown in Figure 6 and then separated from the backing sheet 41 one at a time and ejected from the discharge portion.

In accordance with this embodiment, using a simple key operation, it is possible to select specific data from among the data stored in the RAM 23. In addition, as the operator can monitor the LCD screen 3 while performing the data selection task, it prevents erroneous data being output to the portable label printer 30.

In the above embodiment the label printing data is supplied from a personal computer 50. However, a data preparation means other than a personal computer may be utilized, such as for example a POS system terminal. In the explanation of how the above embodiment is used, one data storage apparatus 1 and one portable label printer 30 are used. However, one portable label printer 30 may used with a plurality of data storage apparatuses 1. In such a case, data could be stored in the data storage apparatus 1 on a merchandise department basis, and the data storage apparatus 1 connected to the portable label printer 30 changed as required. As it is considered that the data storage apparatus 1 will be cheaper than the portable label printer 30 with its many mechanical parts, such an arrangement would enable the printing and application of labels to be done economically.

Thus, in accordance with the present invention as described in the foregoing, the range of label printer applications can be expanded. In addition, because it enables the portable label printer to be made more light and compact, it can be made easier to handle and operate. Also, as data is input from a data preparation means such as a microcomputer, there is very little erroneous data entry.

## Claims

**Claims for the following Contracting States :**

**DE, FR, GB**

1. A data storage apparatus (1) for use with a portable label printer (30) comprising: memory means (23) for storing data provided from an external means (50) for printing on the labels (40), a plurality of function keys (2) including a print-label key (14), means (20,21,22) selectively accessing and retrieving the stored data for output to the portable label printer (30), in accordance with instructions entered using the said keys (2), and a battery-type power supply (28), wherein said apparatus is enclosed in a portable housing (4) separate from the label printer (30) and from said external means (50), and wherein said portable label printer and said portable housing are electrically connected by a cable (31);

   **CHARACTERIZED IN THAT**

   said function keys (2) include a mode key (11), a scroll-up key (12) and a scroll-down key (13).

2. Data storage apparatus (1) as claimed in claim 1, wherein a display surface (3) is provided on the housing (4).

3. Data storage apparatus (1) as claimed in one of the foregoing claims, wherein said cable (31) includes a data line (31A) and a power supply line (31B).

4. Data storage apparatus (1) as claimed in one of the foregoing claims, wherein said housing (4) includes a power switch (5), a first terminal (6) for connecting said portable label printer (30) and a second terminal (7) for connecting said external means (50).

**Claims for the following Contracting States : CH, LI, IT, SE**

1. A data storage apparatus (1) for use with a portable label printer (30) comprising: memory means (23) for storing data provided from an external means (50) for printing on the labels (40), a plurality of function keys (2), means (20,21,22) selectively accessing and retrieving the stored data for output to the portable label printer (30), in accordance with instructions entered using the said keys (2), and a battery-type power supply (28),

   **CHARACTERIZED IN THAT**

   said apparatus is enclosed in a portable housing (4) located remotely from the label printer (30) and from said external means (50), said portable label printer and said data storage apparatus (1) being electrically connected by a detachable cable (31).

2. Data storage apparatus (1) as claimed in claim 1, wherein a display surface (3) is provided on the housing (4).

3. Data storage apparatus (1) as claimed in claim 1 or 2, wherein said function keys (2) include a mode key (11), a scroll-up key (12) a scroll-down key (13) and a print-label key (14).

4. Data storage apparatus (1) as claimed in one of the foregoing claims, wherein said cable (31) includes a data line (31A) and a power supply line (31B).

5. Data storage apparatus (1) as claimed in one of the foregoing claims, wherein said housing (4) includes a power switch (5), a first terminal (6) for connecting said portable label printer (30) and second terminal (7) for connecting said external means (50).

**Revendications**
**Revendications pour les Etats contractants suivants : DE, FR, GB**

1. Dispositif de stockage de données (1) pour imprimante d'étiquetage portable (30) comprenant: un moyen de mémorisation (23) pour mémoriser des données fournies par un moyen extérieur (50) pour une impression sur les étiquettes (40), une pluralité de touches de fonction (2) incluant une touche d'impression sur étiquette (14), des moyens (20,21,22) pour avoir accès et extraire sélectivement les données mémorisées afin de les sortir vers l'imprimante d'étiquetage portable (30), conformément à des instructions introduites en utilisant lesdites touches (2), et une source d'alimentation (28) du type batterie, dans lequel ledit dispositif est enfermé dans un logement portatif (4) séparé de l'imprimante d'étiquetage (30) et dudit moyen extérieur (50),et dans lequel ladite imprimante d'étiquetage portable et ledit logement portatif sont connectés électriquement par un câble (31);
   caractérisé en ce que lesdites touches de fonction (2) comprennent une touche de mode (11), une touche de défilement vers le haut (12) et une touche de défilement vers le bas (13).

2. Dispositif de stockage de données (1) selon la revendication 1, dans lequel une surface de visualisation (3) est prévue sur le logement (4).

3. Dispositif de stockage de données (1) selon l'une quelconque des revendications 1 et 2, dans lequel ledit câble (31) comprend une ligne de données (31A) et une ligne d'alimentation (31B).

4. Dispositif de stockage de données (1) selon l'une quelconque des revendications 1 à 3, dans lequel ledit logement (4) comprend un interrupteur d'alimentation (5), une première borne (6) pour connecter ladite imprimante d'étiquetage portable (30) et une deuxième borne (7) pour connecter ledit moyen extérieur (50).

**Revendications pour les Etats contractants suivants : CH, LI, IT, SE**

1. Dispositif de stockage de données (1) pour imprimante d'étiquetage portable (30) comprenant: un moyen de mémorisation (23) pour mémoriser des données fournies par un moyen extérieur (50) pour une impression sur les étiquettes (40), une pluralité de touches de fonction (2), des moyens (20,21,22) pour avoir accès et extraire sélectivement les données mémorisées afin de les sortir vers l'imprimante d'étiquetage portable (30), conformément à des instructions introduites en utilisant lesdites touches (2), et une source d'alimentation (28) du type batterie,
caractérisé en ce que ledit dispositif est enfermé dans un logement portatif (4) situé à distance de l'imprimante d'étiquetage (30) et dudit moyen extérieur (50), ladite imprimante d'étiquetage portable et ledit dispositif de stockage de données (1) étant connectés électriquement par un câble amovible (31).

2. Dispositif de stockage de données (1) selon la revendication 1, dans lequel une surface de visualisation (3) est prévue sur le logement (4).

3. Dispositif de stockage de données (1) selon l'une quelconque des revendications 1 et 2, dans lequel lesdites touches de fonction (2) comprennent une touche de mode (11), une touche de défilement vers le haut (12), une touche de défilement vers le bas (13) et une touche d'impression sur étiquette (14).

4. Dispositif de stockage de données (1) selon l'une quelconque des revendications 1 à 3, dans lequel ledit câble (31) comprend une ligne de données (31A) et une ligne d'alimentation (31B).

5. Dispositif de stockage de données (1) selon l'une quelconque des revendications 1 à 4, dans lequel ledit logement (4) comprend un interrupteur d'alimentation (5), une première borne (6) pour connecter ladite imprimante d'étiquetage portable (30) et une deuxième borne (7) pour connecter ledit moyen extérieur (50).

**Patentansprüche**
**Patentansprüche für folgende Vertragsstaaten : DE, FR, GB**

1. Datenspeichergerät (1) für einen tragbaren Etikettendrukker (30) mit einer Speichereinrichtung (23) zum Speichern von Daten, die von einer externen Einrichtung (50) zum Drukken auf Etiketten (40) zur Verfügung gestellt werden, mehreren Funktionstasten (2), die eine Etiketten-Ausdrucktaste (14) umfassen, einer Einrichtung (20, 21, 22) zum wahlweisen Zugreifen zu und Ausgeben von den gespeicherten Daten zur Abgabe an den tragbaren Etikettendrucker (30) nach Maßgabe von Befehlen, die unter Benutzung der Tasten (2) eingegeben werden, und einer Speisequelle (28) nach Art einer Batterie, wobei das Gerät in einem tragbaren Gehäuse (4) getrennt vom Etikettendrucker (30) und der externen Einrichtung (50) untergebracht ist, und wobei der tragbare Etikettendrucker und das tragbare Gehäuse über ein Kabel (31) elektrisch miteinander verbunden sind;

**dadurch gekennzeichnet,** daß

die Funktionstasten (2) eine Betriebsweisentaste (11), eine Aufrolltaste (12) sowie eine Abrolltaste (13) und die Ausdrucktaste (14) umfassen.

2. Datenspeichergerät (1) nach Anspruch 1, wobei eine Anzeigefläche (3) auf dem Gehäuse (4) vorgesehen ist.

3. Datenspeichergerät (1) nach Anspruch 1 oder 2, wobei das Kabel (31) eine Datenleitung (31a) und eine Speisezuführungsleitung (31b) umfaßt.

4. Datenspeichergerät (1) nach einem der vorangehenden Ansprüche, wobei das Gehäuse (4) einen Speiseschalter (5), einen ersten Anschluß (6) zum Verbinden des tragbaren Etikettendruckers (30) und einen zweiten Anschluß (7) zum Verbinden der externen Einrichtung (50) umfaßt.

**Patentansprüche für folgende Vertragsstaaten : CH, LI, IT, SE**

1. Datenspeichergerät (1) für einen tragbaren Etikettendrukker (30) mit einer Speichereinrichtung (23) zum Speichern von Daten, die von einer externen Einrichtung (50) zum Drukken auf Etiketten (40) zur Verfügung gestellt werden, mehreren Funktionstasten (2), einer Einrichtung (20, 21, 22) zum wahlweisen Zugreifen zu und Ausgeben von den gespeicherten Daten zur Abgabe an den tragbaren Etikettendrucker (30) nach Maßgabe von Befehlen, die unter Benutzung der Tasten (2) eingegeben werden, und einer Speisequelle (28) nach Art einer Batterie;

   **dadurch gekennzeichnet,** daß

   das Gerät in einem tragbaren Gehäuse (4) untergebracht ist, das von dem Etikettendrukker (30) und der externen Einrichtung (50) entfernt angeordnet ist, wobei der tragbare Etikettendrucker und das Datenspeichergerät (1) über ein lösbares Kabel (31) miteinander elektrisch verbunden sind.

2. Datenspeichergerät (1) nach Anspruch 1, wobei eine Anzeigefläche (3) auf dem Gehäuse (4) vorgesehen ist.

3. Datenspeichergerät (1) nach Anspruch 1 oder 2, wobei die Funktionstasten (2) eine Betriebsweisentaste (11), eine Aufrolltaste (12), eine Abrolltaste (13) und eine Ausdrucktaste (14) umfassen.

4. Datenspeichergerät (1) nach einem der vorangehenden Ansprüche, wobei das Kabel (31) eine Datenleitung (31A) und eine Speisezuführungsleitung (31B) umfaßt.

5. Datenspeichergerät (1) nach einem der vorangehenden Ansprüche, wobei das Gehäuse (4) einen Speiseschalter (5), einen ersten Anschluß (6) zum Verbinden des tragbaren Etikettendruckers (30) und einen zweiten Anschluß (7) zum Verbinden der externen Einrichtung (50) umfaßt.

FIG.1

FIG. 2

DATA TERMINAL DEVICE

FIG.3

FIG.4

FIG.5

EP 0 268 771 B1

START

101 INPUT FROM KEYS? — N

102 MODE KEY? — N

103 DATA ENTRY PERMITTED? — N

104 DATA ENTRY PROHIBITED

105 CHANGE TO DATA ENTRY PERMITTED MODE

106 SCROLL-UP KEY? — N

109 DATA ENTRY PERMITTED? — N

110 ITEM NO.-1

111 DISPLAY ITEM-NO. AND ITEM NAME

107 SCROLL-DOWN KEY? — N

112 DATA ENTRY PERMITTED? — N

113 ITEM NO.+1

114 DISPLAY ITEM NO. AND ITEM NAME

108 PRINT-LABEL KEY? — N

115 DATA ENTRY PERMITTED? — Y

116 SEND DATA TO LABEL PRINTER

DATA ENTRY

201 RECEIVE ONE ITEM'S AMOUNT OF DATA

202 STORE RECEIVED DATA IN RAM

END

11

FIG. 6